(19) Europäisches Patentamt / European Patent Office / Office européen des brevets

(11) **EP 3 383 112 B1**

(12) **EUROPEAN PATENT SPECIFICATION**

(45) Date of publication and mention
of the grant of the patent:
**07.04.2021 Bulletin 2021/14**

(21) Application number: **17735997.3**

(22) Date of filing: **05.01.2017**

(51) Int Cl.:
*H04W 72/04* *(2009.01)*    *H04L 27/00* *(2006.01)*

(86) International application number:
**PCT/JP2017/000174**

(87) International publication number:
**WO 2017/119460 (13.07.2017 Gazette 2017/28)**

(54) **USER TERMINAL, WIRELESS BASE STATION, AND WIRELESS COMMUNICATION METHOD**

BENUTZERENDGERÄT, DRAHTLOSE BASISSTATION UND DRAHTLOSKOMMUNIKATIONSVERFAHREN

TERMINAL UTILISATEUR, STATION DE BASE SANS FIL ET PROCÉDÉ DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2016 JP 2016003058**

(43) Date of publication of application:
**03.10.2018 Bulletin 2018/40**

(73) Proprietor: **NTT DOCOMO, INC.**
**Chiyoda-ku**
**Tokyo 100-6150 (JP)**

(72) Inventors:
• **TAKEDA, Kazuaki**
  **Tokyo 100-6150 (JP)**
• **TAKEDA, Kazuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 858 407      EP-A1- 3 101 982**
**JP-A- 2013 021 416**

• **LG ELECTRONICS: 'Discussions on uplink design for NB-IoT' 3GPP TSG-RAN WG1#83 RL-156884, [Online] 22 November 2015, XP051003238 Retrieved from the Internet: <URL:http://www.3gpp.org/ ftp/tsg_ran/WG1_RL1/TSGR1_83/Docs/R1-15688 4 . zip>**
• **ERICSSON: 'NB-IoT - UL Design' 3GPP TSG-RAN WG1#83 RL-157423, [Online] 22 November 2015, XP051040117 Retrieved from the Internet: <URL:http:// www.3gpp.org/ftp/tsg_ran/WG1_RL1/TSGR1_83 / Docs/RI-157423.zip>**

**Description**

Technical Field

The present invention relates to a user terminal, a radio base station and a radio communication method in a next-generation communication system.

Background Art

In a UMTS (Universal Mobile Telecommunications System) network, for the purposes of achieving higher-speed data rates, providing low delay and so on, long-term evolution (LTE) has been standardized (see Non Patent Literature 1). For the purposes of achieving further broadbandization and higher speed beyond LTE, successor systems to LTE have been also studied (for example, such a system is known as LTE-A (LTE advanced), FRA (Future Radio Access), and 5G (5th Generation Mobile Communication System), etc.).

In recent years, in association with cost reduction of a communication device, there has been developed the inter-machine communication technology (M2M: Machine-to-Machine) such that network-connected machines communicate with each other without human hands and performs automatic control. Particularly, 3GPP (Third Generation Partnership Project) has proceeded with standardization of optimization of MTC (Machine Type Communication) as a cellar system for M2M communication among M2M (see Non Patent Literature 2). MTC user terminal (MTC UE (User Equipment)) has been considered to be used in a wide variety of fields such as electrical meters, gas meters, automatic dispensers, vehicles and other industrial machines.

EP 3,101,982 A2 describes a base station for reducing or avoiding PUCCH conflict among terminals if a PDSCH and a PDCCH for indicating assignment information required to receive the PDSCH are transmitted in different subframes. The base station for transmitting a physical downlink shared channel and a physical downlink control channel in different subframes, wherein the physical downlink control channel indicates assignment information required to receive the physical downlink shared channel, comprises: a resource assignment information storage unit configured to store resource assignment information for a physical uplink control channel or resource assignment information for a physical downlink control channel; a resource assignment unit configured to assign a resource for the physical downlink control channel with reference to the resource assignment information storage unit such that no conflict arises among physical uplink control channels from multiple mobile stations; and a transmission unit configured to transmit the physical downlink control channel and the physical downlink shared channel.

Citation List

Non Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"
Non-Patent Literature 2: 3GPP TR 36.888 "Study on provision of low-cost Machine-Type Communications (MTC) User Equipments (UEs) based on LTE (Release 12)"

Summary of Invention

Technical Problem

In MTC, in terms of cost reduction and improvement of coverage area in a cellar system, there is an increasing demand for MTC user terminal (LC (Low-Cost)-MTC terminal, LC-MTC UE) that is implementable by simple hardware configuration. As a communication scheme for such LC-MC terminal, there has been considered LTE communication in an extremely narrow band (for example, which may be called NB-IoT (Narrow Band Internet of Things), NB-LTE (Narrow Band LTE), NB cellular IoT (Narrow Band cellular Internet of Things), clean slate or the like). Hereinafter, it is assumed that "NB-IoT" mentioned herein includes the above-mentioned NB-LTE, NB cellular IoT, clean slate and so on.

The usage bandwidth of a user terminal supporting NB-IoT (hereinafter referred to as NB-IoT terminal) is expected to be limited to a narrower band (for example, 180 kHz, 1 resource block (also called "RB", "PRB: Physical Resource Block" or the like) than the minimum system bandwidth (1.4 MHz) of the existing LTE system (for example, the LTE system before Rel. 12) .

Thus, for the NB-IoT terminal of which the usage band is limited to the narrow band as compared with the usage band of the existing user terminal (for example, LTE terminal before Rel. 12), resource allocation needs to be performed in a smaller frequency unit than PRB which is the resource allocation unit in the LTE system of (for example, subcarrier unit).

However, in the existing LTE system, resource allocation to the user terminal is merely performed in PRB unit. Accordingly, there is a problem of how to allocate resources to the NB-IoT terminal in a smaller unit than one PRB.

The present invention was carried out in view of the foregoing and aims to provide a user terminal, a radio base station and a radio communication method capable of communicating with use of resources that are allocated in s smaller unit (for example, subcarrier unit) than the resource allocation unit in existing LTE systems.

Solution to Problem

The present invention provides a user terminal according to claim 1, a radio base station according to claim 8 and a radio communication method according to claim 9.

Advantageous Effects of Invention

According to the present invention, it is possible to perform communications with use of resources allocated in a smaller unit (for example, subcarrier unit) than the resource allocation unit of the existing LTE system.

Brief Description of Drawings

Fig. 1 is a diagram for explaining the usage band of an NB-IoT terminal;
Fig. 2 is a diagram illustrating an example of a resource unit in NB-IoT;
Fig. 3 is a diagram illustrating an example of resource allocation in single tone transmission;
Fig. 4 is a diagram for explaining a first determination example of subcarriers according to the first embodiment;
Fig. 5 is a diagram for explaining a second determination example of subcarriers according to the first embodiment;
Fig. 6 is a diagram for explaining a third determination example of subcarriers according to the first embodiment;
Fig. 7 is a diagram for explaining a determination example of subcarriers according to a third embodiment;
Fig. 8 is a diagram illustrating an example of a schematic configuration of a radio communication system of according to the illustrated embodiment;
Fig. 9 is a diagram illustrating an overall configuration of a radio base station according to the illustrated embodiment;
Fig. 10 is a diagram illustrating a functional configuration of the radio base station according to the illustrated embodiment;
Fig. 11 is a diagram illustrating an overall configuration of a user terminal according to the illustrated embodiment;
Fig. 12 is a diagram illustrating a functional configuration of the user terminal according to the illustrated embodiment; and
Fig. 13 is a diagram illustrating the hardware configuration of the radio base station and the user terminal according to the illustrated embodiment.

Description of Embodiments

In an NB-IoT terminal, study has been made to simplify the hardware configuration while accepting reduction of the throughput capacity. For example, the NB-IoT terminal has been considered to be applied with reduction of peak rate, restriction of the transport block size (TBS), restriction of resource block (RE, also called PRB: Physical Resource Block or the like), restriction of reception RF (Radio Frequency).

Unlike LTE terminals whose an upper limit of the usage band is set to the system band (for example, 20 MHz (100 RBs), one component carrier, etc.), an upper limit of the usage band of the NB-IoT terminals is limited to a given narrow band (NB, for example, 180 kHz, 1.4 MHz). For example, this narrow band may be the same as the minimum system band (for example, 180 kHz, 1.4 MHz) of the existing LTE system (LTE system before Rel. 12, which is referred simply as "LTE system") or may be a part of the band (for example, 180 kHz, 1 PRB).

Thus, the NB-IoT terminal is regarded as a terminal whose upper limit of the usage band is narrower than the existing LTE terminal, a terminal that is capable of transmission and/or reception in a narrower band than that of the existing LTE terminal (for example, band narrower than 1.4 MHz). This NB-IoT terminal has been considered to operate in a system band of the LTE terminal in consideration of the backward compatibility with the existing LTE system. For example, in the system band of the LTE system, frequency multiplexing may be supported between NB-IoT terminal with a limited band and the existing LTE terminal with a unlimited band. In addition, NB-IoT may operate not only in the LTE system band but also using the guard band and dedicated frequency between carriers adjacent to the LTE system band.

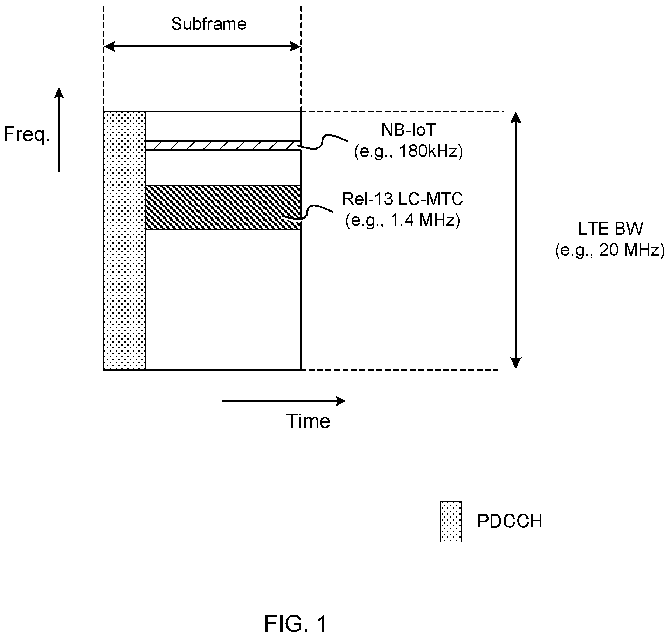

Fig. 1 is a diagram illustrating arrangement of a narrow band that is the usage band of the NB-IoT terminal. In Fig. 1, the usage band of the NB-IoT terminal is set to a part of the system band (for example, 20 MHz) of the LTE system. In the figures following Fig. 1, the usage band of the NB-IoT terminal is illustrated to be set to 180 kHz, but this is not intended to limit the present invention. The usage band of the Nb-IoT terminal has only to be narrower than the system band of the LTE system (for example, 20 MHz), and for example, it may be equal to or smaller than the usage band (for example, 1.4 MHz) of the LC-MTC terminal of Rel. 13.

In addition, the frequency position of the narrow band that is the usage band of the NB-IoT terminal is preferably configured to be variable in the system band. For example, the NB-IoT terminal preferably communicates using different frequency resources per given period (for example, per subframe). This configuration makes it possible to realize traffic offload to the NB-IoT terminal and the frequency diversity effect and also possible to suppress reduction of the frequency usage efficiency. Hence, the NB-IoT terminal preferably has the RF returning function in consideration of the frequency hopping and frequency scheduling.

In addition, the NB-IoT terminal may use different bands between downlink and uplink and may use the same band. The band used for downlink transmission and reception may be called downlink narrow band (DL NB). The band used for uplink transmission and reception may be called uplink narrow band (UL NB).

In addition, the NB-IoT terminal receives downlink control information (DCI) by using a downlink control channel allocated in the narrow band. The downlink control channel may be called PDCCH (Physical Downlink Control Channel), EPDCCH (Enhanced Physical Downlink Control Channel), M-PDCCH (MTC PDCCH), NB-PDCCH or the like.

Besides, the NB-IoT terminal receives downlink data by using a downlink shared channel allocated in the narrow band. The downlink shared channel may be called PDSCH (Physical Downlink Shared Channel), M-PDSCH (MTC PDSCH), NB-PDSCH or the like.

In addition, the NB-IoT terminal transmits uplink control information (UCI) including retransmission control information (HARQ-ACK: Hybrid Automatic Repeat request-ACKnowledge), channel state information (CSI) and so on by using an uplink control channel allocated in a narrow band. The uplink control channel may be called PUCCH (Physical Uplink Control Channel), M-PUCCH (MTC PUCCH), NB-PUCCH or the like.

Further, the NB-IoT terminal receives uplink data and/or UCI by using an uplink shared channel allocated in the narrow band. The uplink shared channel may be called PUSCH (Physical Uplink Shared Channel), M-PUSCH (MTC PUSCH), NB-PUSCH or the like.

Channels as used are not limited to the above-mentioned ones, and may be conventional channels used for the same purposes but added with "M" indicating MTC, "N" indicating NB-IoT or "NB". In the following description, the downlink control channel, downlink shared channel, uplink control channel and uplink shared channel used in the above-mentioned narrow band are called, PDCCH, PDSCH, PUCCH, PUSCH, respectively, but as described above, appellation is not limited to these.

Further, the NB-IoT may perform repetitive transmission/reception by transmitting and receiving the same downlink signals (for example, PDCCH, PDSCH, etc.) and/or uplink signals (for example, PUCCH, PUSCH, etc.) over a plurality of subframes to extend the coverage. The number of subframes associated with transmission and reception of the same downlink signals and/or uplink signals is also called the repetition number. In addition, the repetition number may denoted by the repetition level. The repetition level may be called coverage enhancement (CE) level.

In the NB-IoT mentioned above, it has been studied to support transmission using single tone (single-tone transmission) and transmission using multiple tone (multiple-tone transmission) in uplink transmission. Here, tone is synonymous with subcarrier and means each divided band from the usage band (for example, 180 kHz, one resource block).

In single-tone transmission, it has been studied to support the same subcarrier spacing (that is, 15 kHz) as the existing LTE system and the narrower subcarrier spacing than the LTE system (for example, 3.75 kHz) than the LTE system. On the other hand, in multiple-tone transmission, it has been studied to support the same subcarrier spacing (that is, 15 kHz) as the LTE system.

In addition, in the NB-IoT terminal, it has been studied to perform uplink transmission (for example, PUSCH or/and PUCCH transmission) with the number of tones (subcarriers) provided from the radio base station. Combination of the number of tones may be, for example, {1, 2, 4, 12} or {1, 3, 6, 12} or the like. Thus, the number of tones selected from predetermined combinations may be configured by higher layer signaling (for example, RRC (Radio Resource Control) signaling or broadcast information) and the NB-IoT terminal may perform uplink transmission with configured number of tones.

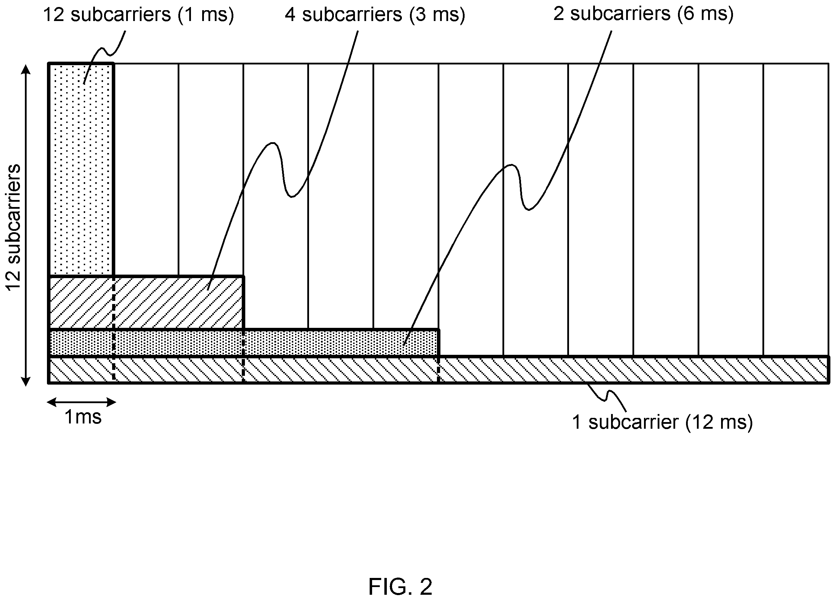

Fig. 2 is a diagram illustrating an example of a resource unit in the NB-IoT. In Fig. 2, it is assumed that the combination of the number of tones (subcarriers) as used is {1, 2, 4, 12}, but the combination is not limited to this. The subcarrier spacing is 15 KHz and one PRB (180 kHz) of the existing LTE system may be configured of 12 subcarriers, but this is not intended to limit the present invention.

Here, as illustrated in Fig. 2, it is assumed that the number of resources that constitute one resource unit (for example, number of resource elements (REs)) is the same irrespective of the number of tones (subcarriers). For example, in Fig. 2, one resource unit is 1 ms when using twelve subcarriers, 3 ms when using four subcarriers, 6 ms when using two subcarriers and 12 ms when using one subcarrier.

In Fig. 2, when one resource unit is configured in a smaller frequency unit (for example, one, two, four subcarriers) than one PRB (180 kHz, twelve subcarriers), the time length of the one resource unit becomes longer (for example, 12 ms, 6 ms, 3ms, etc.) in accordance with the frequency unit. Therefore, if the frequency unit (the number of subcarriers) constituting one resource unit is changed, the number of REs that constitute one resource unit is able to remain unchanged.

In Fig. 2, one transport block (TB) as a data storage unit may be mapped to one resource unit or to a plurality of resource units. Otherwise, the resource unit as described above may be used not only for uplink transmission but also for downlink transmission.

Here, in the existing LTE system, resources are allocated on a per PRB basis, one PRB consisting of twelve subcarriers (180 kHz). On the other hand, in NB-IoT, as explained with reference to Fig. 2, one resource unit may be configured in a smaller frequency unit (for example, one, two, four subcarriers) than one PRB (twelve subcarriers). Therefore, resource allocation in a smaller frequency unit (for example, subcarrier unit) than PRB (180 kHz) that is a resource allocation unit in the LTE system.

However, in the existing LTE system, resource allocation to a user terminal is merely performed in PRB unit. Therefore, there is a problem of how to allocate resources to an NB-IoT terminal in a smaller frequency unit (for example, subcarrier unit) than one PRB. Particularly, there is also a problem of how to allocate a single subcarrier to the NB-IoT terminal when single tone transmission is performed using a single subcarrier.

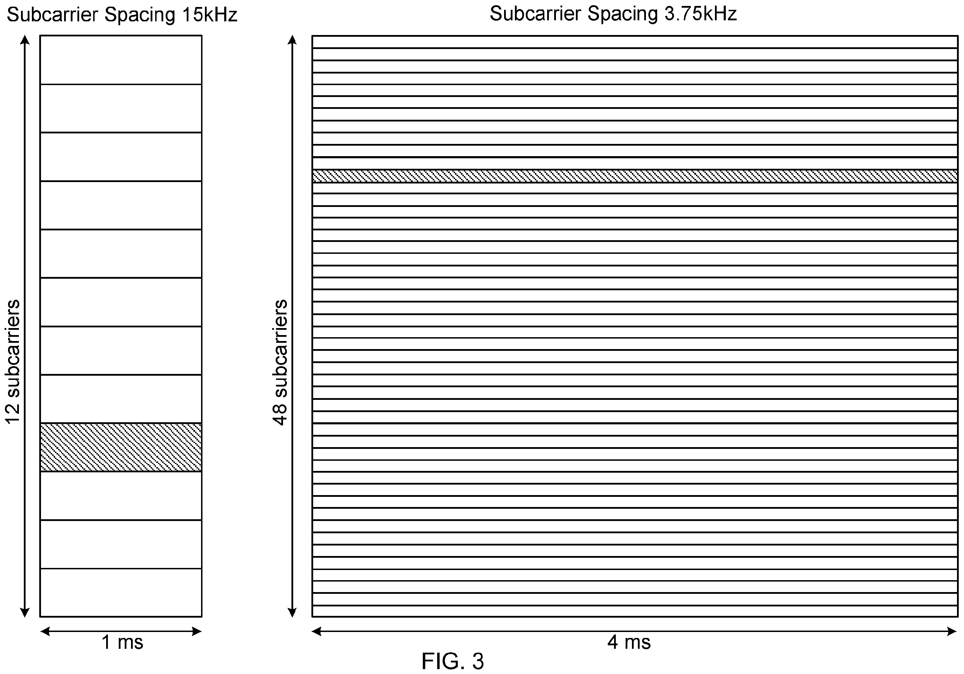

Fig. 3 is a diagram illustrating an example of resource allocation in single tone transmission. As illustrated in Fig. 3, when the subcarrier spacing is 15 kHz, 180 kHz is configured of twelve subcarriers. On the other hand, the subcarrier spacing is 3.75 kHz, 180 kHz is configured of forty-eight subcarriers, and one resource unit has a four times longer time length than when the subcarrier spacing is 15 kHz.

In Fig. 3, it is assumed that the time length of one resource unit is 1 ms when the subcarrier spacing is 15 kHz and is 4 ms when the subcarrier spacing is 3.75 kHz. However, this is not intended to limit the present invention. The time length of one resource unit may be any time length as far as it becomes longer as the subcarrier spacing becomes narrower.

In Fig. 3, when the subcarrier spacing is 15 kHz, if subcarriers used for single-tone transmission are allocated dynamically using DCI, it is necessary to provide an at least four-bit resource allocation field in DCI to identify twelve subcarriers. In addition, when the subcarrier spacing is 3.75 kHz, if subcarriers used in single tone transmission are allocated dynamically by using DCI, it is necessary to provide an at least six-bit resource allocation field in DCI to identify forty-eight subcarriers.

Thus, when allocating a subcarrier to use in single tone transmission dynamically by using DCI, there may be a risk that the number of DCI bits increases and the overhead increases. On the other hand, since the usage band of the NB-IoT terminal is greatly restricted as compared with the system band of the LTE system (for example, limited to 180 kHz), even if subcarriers are allocated in the frequency band dynamically by using the DCI, the frequency diversity effect cannot be expected.

Here, the present inventors have noted that in NB-IoT where the usage band is restricted as compared with the system band of the LTE system, there is reduction in frequency diversity effect obtained by dynamic resource allocation using DCI, and have found the idea that resource allocation is determined by an NB-IoT terminal itself instead of the resource allocation given explicitly by use of DCI.

Specifically, in the present invention, the NB-IoT terminal determines the allocation resource to the NB-IoT terminal in a smaller frequency unit (for example, subcarrier unit) than 1 PRB based on at least one of resource information to use in DCI reception, identification information of the NB-IoT terminal (user terminal) and candidate subcarriers configured by higher layer signaling. The NB-IoT terminal performs uplink and/or downlink communication by using determined allocation resources.

The following description is made of an embodiment of the present invention in detail with reference to the drawings. In the following description, it is assumed that the usage band of the NB-IoT terminal is limited to 180 kHz (1 PRB) that is smaller than the smallest system band (1.4 MHz) of the existing LTE system, but this is not intended to limit the present invention. In the present embodiment, the usage band of the NB-IoT terminal may be 1.4 MHz that is equal to the smallest system band of the existing LTE system, a narrower band than 180 kHz, or any other bandwidth as far as it is narrower than the system band of the existing LTE system.

In the following description, it is assumed that the subcarrier spacing is 15 kHz and 180 kHz consists of 12 subcarriers, but it is not intended to limit the present invention. The present embodiment may be used appropriately, for example, when the subcarrier spacing is 3.75 kHz and 180 kHz consists of 48 subcarriers. As explained with reference to Fig. 3, the time length of one resource unit may be changed in accordance with the subcarrier spacing.

Besides, the following description concerns an example of allocation of a single subcarrier used in single tone transmission, but it is not intended to limit the present invention. The present embodiment is also applicable to multi tone transmission in a smaller frequency unit than 1 PRB (180 kHz) (for example, 2, 4, 3 or 6 subcarriers). In the following description, it is assumed that the resource allocation unit is "subcarrier (tone)", but the resource allocation unit in the present embodiment is not limited to this, but may be any smaller frequency unit than the resource allocation unit (PRB) in the existing LTE system.

The NB-IoT terminal according to the present embodiment receives DCI and performs PUSCH transmission in accordance with allocation by the DCI. The NB-IoT terminal determines the above-mentioned subcarrier to use in PUSCH transmission (PUSCH resource) based on at least one of resource information to use in DCI reception, identification information of the NB-IoT terminal, and candidate subcarriers configured by higher layer signaling.

(First Embodiment)

In the first embodiment, the NB-IoT terminal determines a subcarrier for PUSCH transmission based on resource information used in DCI reception. Specifically, the NB-IoT terminal may determine a subcarrier for PUSCH transmission based on the resource information and the number of subcarriers (for example, 12, 48 or the like) in the usage band (for example, 180 kHz) of the NB-IoT terminal.

Here, the resource information may be, for example, at least one of control channel element (CCE) index, resource element group (REG) index, subframe number (subframe index), CCE or ECCE aggregation level, DCI repetition number, coverage level (repetition level), the number of subframes associated with DCI transmission (the number of subframes to which one DCI is mapped, the number of transmission subframes arranged with search spaces or the number of subframes for NB-PDCCH given by DCI and the like.

The resource information is not limited to those illustrated above and may be any information as far as it is a parameter used in DCI reception (or detection). For example, when the DCI reception in the usage band of the NB-IoT terminal is based on the existing PDCCH parameter, as described above, CCE index, REG index and the like are considered, but if the above-mentioned DCI reception is based on a parameter of the existing EPDCCH, the CCE index may be an enhanced control channel element (ECCE) index and the REG index may be an enhanced resource element group (EREG) index or the like.

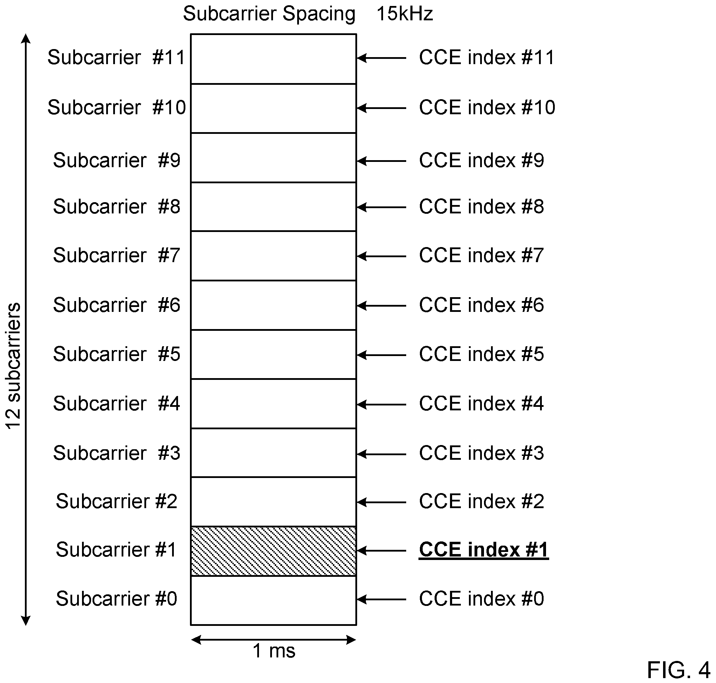

Fig. 4 is a diagram for explaining a first example of determining subcarriers according to the first embodiment. In Fig. 4, it is assumed that 12 CCEs (CCE indexes #0 to #11) are used and the number of CCEs is equal to the number of subcarriers in the usage band of the NB-IoT terminal, but it is not intended to limit the present invention.

In Fig. 4, the NB-IoT terminal determines the above-mentioned subcarrier to use in PUSCH transmission based on the CCE index to use in DCI reception and the number of subcarriers (here, twelve) in the usage band (for example, 180 kHz) of the NB-IoT terminal. Here, the CCE index may be the index of the first CCE of one or more CCEs where DCI is arranged (that is, the lowest CCE index).

Specifically, as illustrated in the following equation (1), the NB-IoT terminal may determine the above-mentioned subcarrier $RA_{PUSCH}$ to use in PUSCH transmission based on a residual of the above-mentioned CCE index $I_{CCE}$ and the above-mentioned number of subcarriers $N_{SC}$.

(Equation 1)

$$RA_{PUSCH} = I_{CCE} \bmod N_{SC}$$

For example, as illustrated in Fig. 4, when the NB-IoT terminal receives DCI in CCE index #1, according to the above-mentioned equation (1), subcarrier #1 is determined to be a subcarrier to use in PUSCH transmission. In the above-mentioned equation (1), as illustrated in Fig. 4, if the number of CCEs is the number of subcarriers in the usage band of the NB-IoT terminal or more, all the subcarriers in the usage band may be used in PUSCH transmission.

On the other hand, when the number of CCEs is smaller than the number of subcarriers, subcarriers may be used for PUSCH transmission only partially. For example, in the case of 6CCE (CCE indexes #0 to #5), according to the above-mentioned equation (1), subcarriers #6 to #11 cannot be used in PUSCH transmission. Then, a subcarrier for PUSCH transmission may be determined based on other resource information in addition to the CCE index.

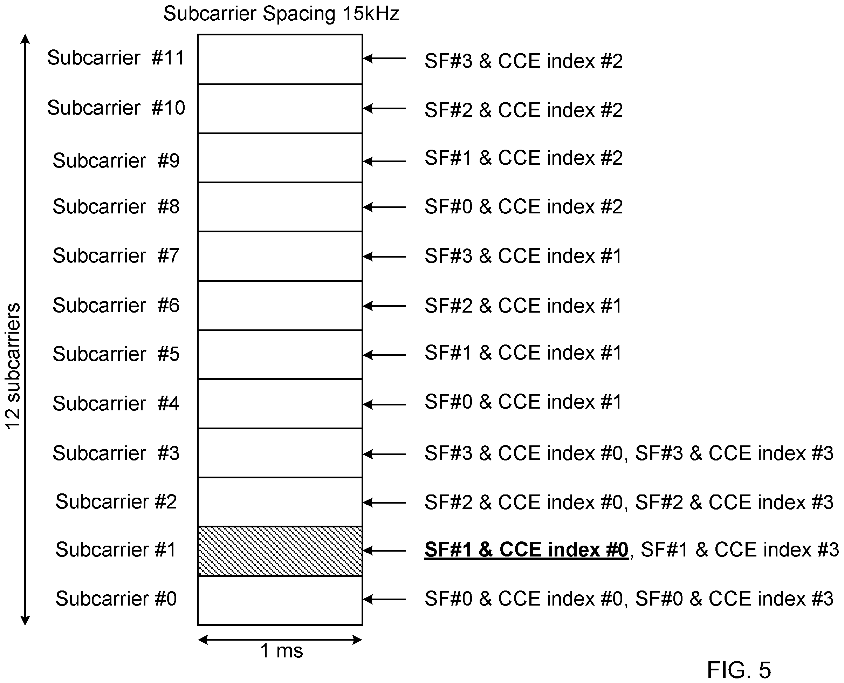

Fig. 5 is a diagram for explaining a second example of determining subcarriers according to the first embodiment. In Fig. 5, four CCEs (CCE indexes #0 to #3) are used and the number of CCEs are smaller than the number of subcarriers in a usage band of the NB-IoT terminal, but this is not intended to limit the present invention. In Fig. 5, as an example, it is assumed that the number of subframes for NB-PDCCH is four, but the number of subframes is not limited to this.

In Fig. 5, the NB-IoT terminal determines the above-mentioned subcarrier for PUSCH transmission based on the above-mentioned CCE index, the above-mentioned number of subcarriers, the number of transmission subframes associated with DCI transmission and a number of a subframe in which DCI is received (detected).

Specifically, for example, as illustrated in the following equation (2), the NB-IoT terminal may determine the above-mentioned subcarrier $RA_{PUSCH}$ to use in PUSCH transmission, based on the above-mentioned CCE index ICCE, a calculation result of the number of transmission subframes associated with DCI transmission (the number of subframes to which one DCI is mapped, the number of transmission subframes arranged with search spaces or the number of subframes for NB-PDCCH given by DCI) $N_{SF}$ and the subframe number $n_{SF}$ were DCI is detected, and a residual of the above-mentioned number of subcarriers $N_{SC}$.

(Equation 2)

$$RA_{PUSCH} = (I_{CCE} \times N_{SF} + n_{SF}) \bmod N_{SC}$$

For example, as illustrated in Fig. 5, when the NB-IoT terminal receives DCI in CCE #0 of subframe #1, according to the above-mentioned equation (2), subcarrier #1 is determined to be a subcarrier to use in PUSCH transmission. According to the above-mentioned equation (2), even when the number of CCEs is smaller than the number of subcarriers in the usage band of the NB-IoT terminal, there is higher possibility of using all the subcarriers in the usage band.

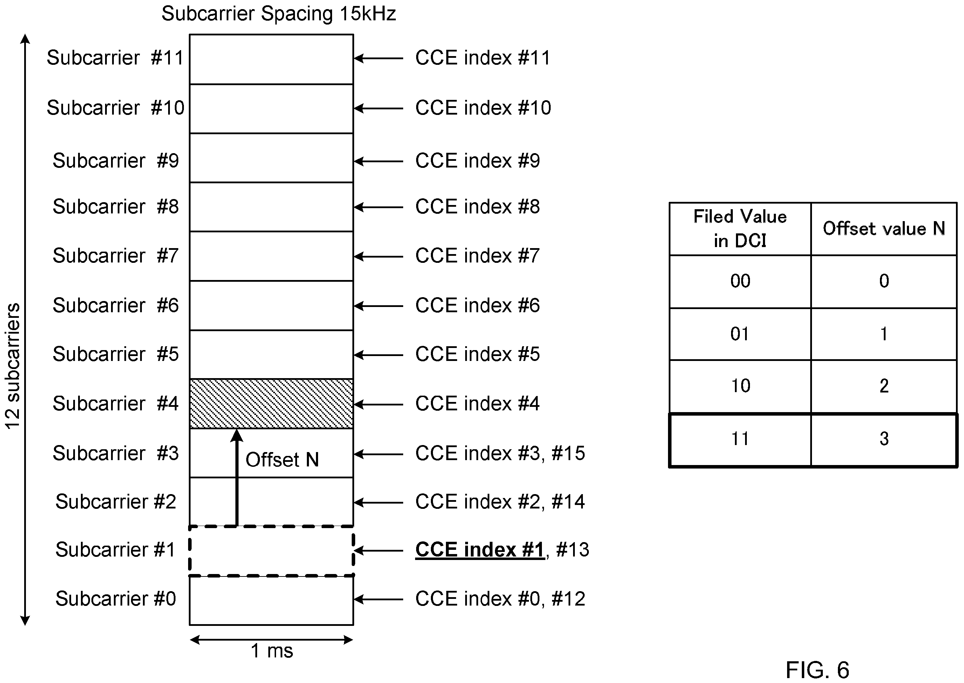

In addition, in order to avoid collision of subcarriers to use in PUSCH transmission between NB-IoT terminals that receive DCI in the same subframe, there may be used a given offset value. Fig. 6 is a diagram for explaining a third example of determining subcarriers according to the first embodiment. Here, in Fig. 6, it is assumed that 16 CCEs (CCE indexes #0 to #15) are used and the number of CCEs is greater than the number of subcarriers in the usage band of the NB-IoT terminal, but it is not intended to limit the present invention.

In Fig. 6, according to the above-mentioned equation (1), the NB-IoT terminal with DCI in CCE of CCE index #1 (hereinafter referred to as "CCE #1") and the NB-IoT terminal with DCI in CCE #13 may collide with each other when the subcarrier for PUSCH transmission is subcarrier #1. In order to avoid the collision, the NB-IoT terminal determines a subcarrier to use in the PUSCH transmission based on the above-mentioned CCE index and the number of subcarriers, and a given offset value.

Specifically, the NB-IoT terminal may determine, for example, as shown in the following equation (3), the above-mentioned subcarrier $RA_{PUSCH}$ to use in PUSCH transmission based on a residual of the above-mentioned CCE index $I_{CCE}$ and the number of subcarriers $N_{SC}$ and a given offset value N.

(Equation 3)

$$RA_{PUSCH} = I_{CCE} \bmod N_{SC} + N$$

Here, a given offset value may be associated with a value in a given field of DCI or may be configured by higher layer signaling. Otherwise, it may be associated with identification information of the NB-IoT terminal (for example, radio network temporary identifier (RNTI). In Fig. 6, as an example, a given offset value is associated with a value in a given field in DCI.

Here, the number of bits in a given field of DCI is not limited to two, but may be one or three or more. In addition, an offset value associated with a value in a given field of DCI in Fig. 6 is given for illustrative purposes only and is not limited to this. In addition, an offset value associated with a value in a given field of DCI may be configured by higher layer signaling.

For example, as illustrated in Fig. 6, the NB-IoT terminal receives DCI in CCE index #1 and when a value in a given field of DCI is "11", according to the above-mentioned equation (3), the offset value "3" associated with the given field value is selected and subcarrier #4 is determined to be a subcarrier for PUSCH transmission.

In Fig. 6, when the radio base station is able to avoid collision of subcarriers for PUSCH transmission between NB-IoT terminals such that DCI is arranged in CCE indexes #1 and #13 by setting a value in a given field of DCI allocated to CCE index #13 to other than "11". Thus, by using a given offset value, it is possible to reduce occurrence of collision of subcarriers for PUSCH transmission between NB-IoT terminals.

As described above, according to the first embodiment, the NB-IoT terminal itself determines a subcarrier for PUSCH transmission based on resource information to use in DCI reception and the number of subcarriers in a usage band of the NB-IoT terminal. Therefore, the radio base station needs not to give a subcarrier for PUSCH transmission explicitly by using DCI. As a result, even when resources for uplink transmission are allocated in subcarrier unit, it is possible to reduce an increase in overhead in association with an increase in number of bits of DCI.

In the first embodiment, the above-mentioned equations (1) to (3) are given only for illustrative purposes only, and they may be any other equations as far as they are based on the above-mentioned resource information and the number of subcarriers. For example, in the above-mentioned equation (2), the above-mentioned given offset value may be added. In addition, the above-mentioned equations (1) to (3) may be given in consideration of an aggregation level of CCE, coverage level and the like. In addition, the CCE indexes in the above-mentioned equations (1) to (3) may be changed to REG indexes. Further, various parameters may be added to the above-mentioned equations (1) to (3) and needless to say, given coefficients may be given to various parameters of the above-mentioned equations (1) to (3).

(Second Embodiment)

In the second embodiment, the NB-IoT terminal determines a subcarrier for PUSCH transmission based on identification information (for example, RNTI) of the NB-IoT terminal (user terminal). Specifically, the NB-IoT terminal may determine a subcarrier for PUSCH transmission based on its own identification information and the number of subcarriers (for example, 12, 48 or the like in a usage band of the NB-IoT terminal (for example, 180 kHz).

In the second embodiment, the NB-IoT terminal determines the above-mentioned subcarrier to use in PUSCH transmission based on identification information (for example, RNTI) of the NB-IoT terminal and the number of subcarriers (for example, 12) in a usage band of the NB-IoT terminal. Here, RNTI may be terminal-specific C-RNTI (Cell-Radio Network Temporary Identifier). In addition, the RNTI may be scrambled to cyclic redundancy check (CRC) added to DCI. In the following description, RNTI is cited as an example, but the identification information of NB-IoT terminal is not limited to RNTI, but may be any identifier (ID) of the user terminal.

Specifically, the NB-IoT terminal may determine the above-mentioned subcarrier for PUSCH transmission $RA_{PUSCH}$ based on a residual of the above-mentioned RNTI $n_{RNTI}$ and the above-mentioned number of subcarriers $N_{SC}$.

(Equation 4)

$$RA_{PUSCH} = n_{RNTI} \bmod N_{SC}$$

In addition, in order to prevent collision of subcarriers for PUSCH transmission between NB-IoT terminals, a given offset value may be used. Specifically, the NB-IoT terminal may determine the above-mentioned subcarrier for PUSCH transmission $RA_{PUSCH}$ based on a residual of the above-mentioned RNTI $n_{RNTI}$ and the above-mentioned number of subcarriers $N_{SC}$ and a given offset value N.

(Equation 5)

$$RA_{PUSCH} = n_{RNTI} \bmod N_{SC} + N$$

As described above, a given offset value N may be associated with a value of a given field in DCI or may be configured by higher layer signaling. The number of bits in a given field of DCI may be 1 or 2 bits, or may be three or more bits. The offset value associated with a value in a given field in DCI may be configured by higher layer signaling.

As described above, according to the second embodiment, the NB-IoT terminal determines a subcarrier for PUSCH transmission by itself, based on its own identification information and the number of subcarriers in a usage band of the NB-IoT terminal. Therefore, the radio base station needs not to provide the subcarrier for PUSCH transmission explicitly by using DCI. As a result, even when the resource for uplink transmission is allocated in subcarrier unit, it is possible to prevent an increase in overhead in association with increase in number of bits in DCI.

In the second embodiment, the above-mentioned equations (4) and (5) are given only for illustrative purposes, and any other equation may be used as far as it is based on the identification information of the NB-IoT terminal and the number of subcarriers. For example, in the above-mentioned equations (4) and (5), resource information described in the first embodiment may be considered. In addition, various parameters may be added to the above-mentioned equations (4) and (5), or a given coefficient may be given to each parameter of the above-mentioned equations (4) and (5).

(Third Embodiment)

In the third embodiment, the NB-IoT terminal determines a subcarrier for PUSCH transmission based on candidate subcarriers. Specifically, the NB-IoT terminal determines the above-mentioned candidate subcarrier associated with a value in a given field in DCI as the above-mentioned subcarrier for PUSCH transmission.

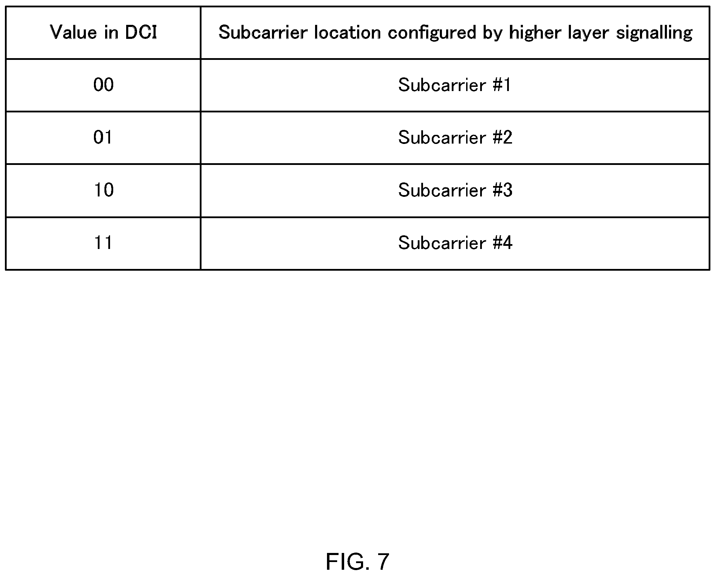

Fig. 7 is a diagram for explaining an example of determining subcarriers according to the third embodiment. In the third embodiment, a plurality of subcarrier candidates (candidate subcarriers) is configured in advance by higher layer signaling. For example, in Fig. 7, candidate subcarriers #1 to #4 are configured. In addition, candidate subcarriers #1 to #4 are associated respectively with values in a given field of DCI.

The NB-IoT terminal determines a candidate subcarrier associated with a value in a given field of DCI as a subcarrier for PUSCH transmission. For example, in Fig. 7, if a value in a given field of DCI is "01", the NB-IoT terminal determines that the candidate subcarrier #2 configured by higher layer signaling is a subcarrier for PUSCH transmission.

Here, in Fig. 7, four candidate subcarriers are configured by higher layer signaling, but this is not intended to limit the present invention. The number of candidate subcarriers may be changed in accordance with the number of bits in a given field of DCI associated with the candidate subcarriers, and it may be smaller than 4 (for example, 2) or 5 or more.

Thus, according to the third embodiment, candidate subcarriers are provided in advance by higher layer signaling and one of the candidate subcarriers is designated by a given field in the DCI. Accordingly, as compared with the case of designating one of all subcarriers within the usage bandwidth with use of DCI, it is possible to reduce bits in DCI. As a result, it is possible to reduce an increase in overhead when resources for uplink transmission are allocated in subcarrier unit.

In the third embodiment, it is possible to prevent collision of subcarriers for PUSCH transmission between NB-IoT terminals by differentiating candidate subcarriers configured by higher layer signaling per NB-IoT terminal.

Up to this point, the determination method of a PUSCH transmission tone has been described. However, in addition to the above-mentioned PUSCH resource determination method, the PUSCH PRB position may be configured by higher layer signals or may be allocated by using DCI of NB-PDCCH.

(Other Embodiments)

The PUSCH resource determining method described up to this point may be applied to determination of a resource for PDSCH transmission and reception.

That is, the NB-IoT terminal according to the present embodiment may receive DCI and PDSCH allocated by the DCI. The NB-IoT terminal may determine a subcarrier (PDSCH resource) to use in the PDSCH reception, based on at least one of resource information to use in DCI reception, identification information of the NB-IoT terminal and a candidate subcarrier configured by higher layer signaling. Specifically, the NB-IoT terminal may determine a subcarrier for PDSCH reception by sing the same methods as those of the first to third embodiments.

(Radio Communication System)

The following description concerns the configuration of a radio communication system according to an embodiment of the present invention. This radio communication system is applied with each of the radio communication methods according to the embodiments explained above. Furthermore, the communication methods of the respective embodiments each can be applied independently, or in combination. In this description, it is assumed that the NB-IoT terminal is illustrated as an example of a user terminal of which the usage band is limited to a narrow band, but this is not intended to limit the present invention.

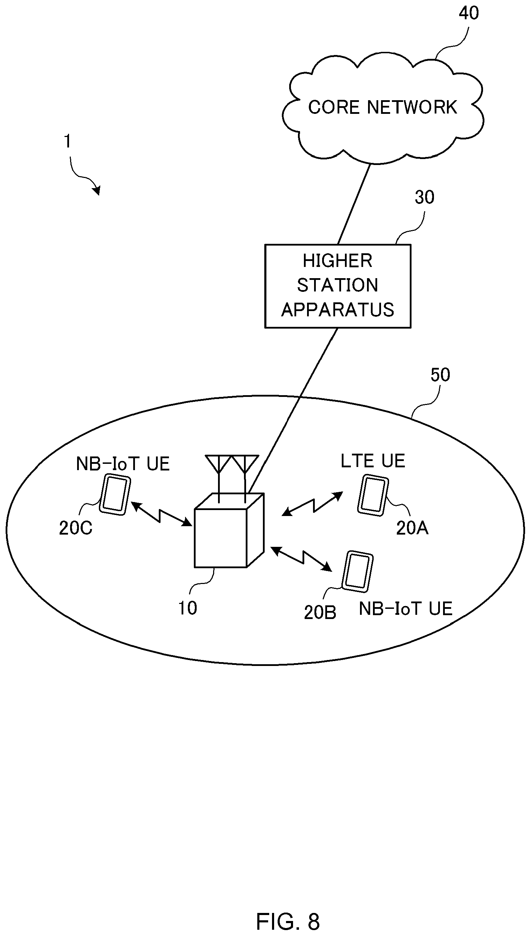

Fig. 8 shows an example of a schematic configuration of the radio communication system according to an embodiment of the present invention. The radio communication system 1 illustrated in Fig. 8 can adopt carrier aggregation (CA) and/or dual connectivity (DC) in which a plurality of fundamental frequency blocks (component carriers) are aggregated and a system bandwidth of the LTE system (for example, 20 MHz) is used as one unit. Further, the LTE system is configured in a system band of minimum 1.4 MHz to maximum 20 MHz for both downlink and uplink, but it is not intended to limit the present invention.

Note that this radio communication system 1 may also be called SUPER 3G, LTE-A (LTE-Advanced), IMT-Advanced, 4G (4th generation mobile communication system), 5G (5th generation mobile communication system), or FRA (Future Radio Access), etc.

The radio communication system 1 is configured to include a radio base station 10 and a plurality of user terminals 20A, 20B and 20C wirelessly connected to the radio base station 10. The radio base station 11 is connected to a higher station apparatus 30, and is connected to a core network 40 via the higher station apparatus 30. The higher station apparatus 30 includes, but is not limited to, an access gateway apparatus, a radio network controller (RNC), and a mobility management entity (MME), etc.

The multiple user terminals 20 (20A through 20C) are able to communicate with the radio base station 10 in a cell 50. For example, the user terminal 20A is a user terminal (hereinafter referred to as "LTE terminal" (LTE UE: LTE User Equipment) that supports LTE (up to Rel-10) or LTE-Advanced (including Rel-10 or later). The other user terminals 20B and 20C are NB-IoT terminals (NB-IoT UE: NB-IoT User Equipment) as communication devices in a machine communication system. The user terminals 20A, 20B and 20C may be called simply user terminals 20, unless they need to be discriminated from each other. The user terminals 20 may be also called UE (User Equipment) or the like.

The NB-IoT terminals 20B and 20C are user terminals each having a usage band restricted to a narrower band than the minimum system band width supported in the existing LTE system. Here, the NB-IoT terminals 20B and 20C may be terminals supporting various communication schemes such as LTE and LTE-A or may be not only fixed communication terminals such as electric meters, gas meters, automatic dispensers but also mobile communication terminals such as vehicles, or the like. A user terminal 20 may communicate with another user terminal 20 directly or via the radio base station 10.

In the radio communication system 1, as radio access schemes, OFDMA (Orthogonal Frequency Division Multiple Access) is applied to the downlink, and OFDMA and/or SC-FDMA (Single-Carrier Frequency Division Multiple Access) is applied to the uplink. OFDMA is a multi-carrier transmission scheme for performing communication by dividing a frequency band into a plurality of narrow frequency bands (subcarriers) and mapping data to each subcarrier. SC-FDMA is a single carrier transmission scheme to reduce interference between terminals by dividing, per terminal, the system bandwidth into bands formed with one or continuous resource blocks, and allowing a plurality of terminals to use mutually different bands. Note that combination of uplink and downlink radio access schemes is not limited to this.

In the radio communication system 1, used as downlink channels are a downlink shared channel (PDSCH: Physical Downlink Shared Channel) that is used by each user terminal 20 on a shared basis, a broadcast channel (PBCH: Physical Broadcast channel), and a downlink L1/L2 control channel, etc. PDSCH is used to transmit user data and higher layer control information, and an SIB (System Information Block). Furthermore, PBCH is used to transmit an MIB (Master Information Block), etc.

The downlink L1/L2 control channel includes a PDCCH (Physical Downlink Control Channel), an EPDCCH (Enhanced Physical Downlink Control Channel), a PCFICH (Physical Control Format Indicator Channel), and a PHICH (Physical Hybrid-ARQ Indicator Channel), etc. The PDCCH is used to transmit downlink control information (DCI), etc., which includes PDSCH and PUSCH scheduling information. The PCFICH is used to transmit the number of OFDM symbols used in the PDCCH. The PHICH is used to transmit PUSCH retransmission control information (HARQ-ACK). The EPDCCH is frequency-division-multiplexed with a PDSCH (downlink shared data channel) and is used for transmitting the DCI like the PDCCH.

In the radio communication system 1, used as uplink channels are an uplink shared channel (PUSCH: Physical Uplink Shared Channel) that is used by each user terminal 20 on a shared basis, an uplink L1/L2 control channel (PUCCH: Physical Uplink Control Channel), and a random access channel (PRACH: Physical Random Access Channel), etc. The PUSCH may be called an uplink data channel. The PUSCH is used to transmit user data and higher layer control information. The PUCCH is used to transmit downlink radio quality information (CQI: Channel Quality Indicator), retransmission control information (HARQ-ACK) and so on. The PRACH is used to transmit a random access preamble for establishing connection with a cell.

Here, channels for MTC terminals/MB-IoT terminals may be represented by "M" indicating MTC or "NB" indicating NB-IoT. Otherwise, PDCCH/EPDCCH, PDSCH, PUCCH and PUSCH may be called M(NB)-PDCCH, M(NB)-PDSCH, M(NB)-PUCCH, M(NB)-PUSCH, respectively. Hereinafter, they are called simply PDCCH, PDSCH, PUCCH and PUSCH, respectively, unless they are discriminated from each other.

In the radio communication system 1, downlink reference signals as transmitted are a cell-specific reference signal (CRS), a channel state information-reference signal (CSI-RS), a demodulation reference signal (DMRS), a positioning reference signal (PRS) and so on. Further, in the radio communication system 1, uplink reference signals as transmitted are a measurement reference signal (SRS: Sounding Reference Signal), a demodulation reference signal (DMRS) and so on. The DMRS may be also called a user terminal specific reference signal (UE-specific Reference Signal). The reference signals as transmitted are not limited to these signals.

<Radio Base Station>

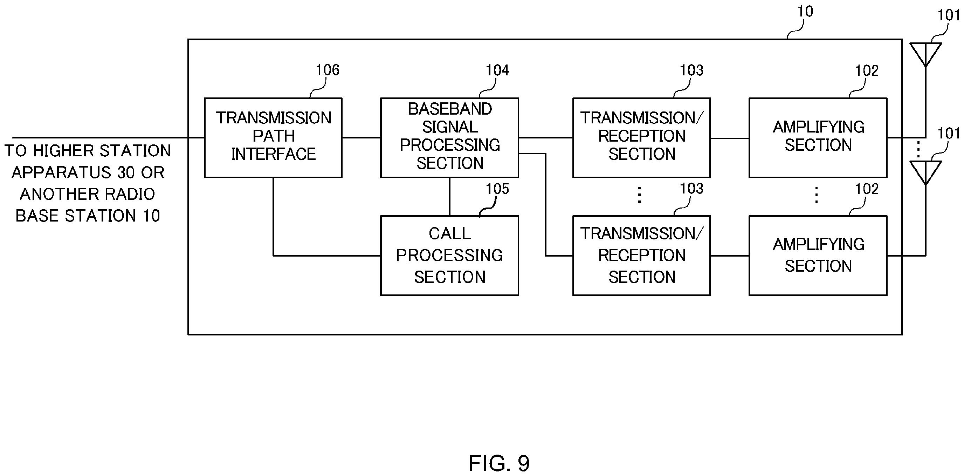

Fig. 9 is a diagram illustrating an overall configuration of the radio base station according to an embodiment of the present invention. The radio base station 10 is configured to include at least a plurality of transmission/reception antennas 101, amplifying sections 102, transmission/reception sections 103, a baseband signal processing section 104, a call processing section 105 and a transmission path interface 106.

User data that is to be transmitted on the downlink from the radio base station 10 to the user terminal 20 is input from the higher station apparatus 30, via the transmission path interface 106, into the baseband signal processing section 104.

In the baseband signal processing section 104, in regard to the user data, signals are subjected to PDCP (Packet Data Convergence Protocol) layer processing, RLC (Radio Link Control) layer transmission processing such as division and coupling of user data and RLC retransmission control transmission processing, MAC (Medium Access Control) retransmission control (e.g., HARQ (Hybrid Automatic Repeat reQuest) transmission processing), scheduling, transport format selection, channel coding, inverse fast Fourier transform (IFFT) processing, and precoding processing, and resultant signals are transferred to the transmission/reception sections 103. Furthermore, in regard to downlink control signals, transmission processing is performed, including channel coding and inverse fast Fourier transform, and resultant signals are also transferred to the transmission/reception sections 103.

Each transmission/reception section 103 converts the baseband signals, output from the baseband signal processing section 104 after being precoded per each antenna, to a radio frequency band and transmits this radio frequency band. Note that each transmission/reception section 103 may be configured as a transmitter/receiver, a transmission/reception circuit or a transmission/reception device as explained based on common knowledge in the technical field to which the present invention pertains. The transmission/reception section 103 may be configured of an integral transmission/reception section, or may be configured as a transmission section and a reception section.

The radio frequency signal frequency-converted in the transmission/reception section 103 is amplified in the amplifying section 102 and transmitted from the corresponding transmission/reception antenna 101. The transmission/reception section 103 is able to transmit and receive various signals in a narrow bandwidth (for example, 180 kHz) that is narrowed from the system bandwidth (for example, one component carrier).

Whereas, in regard to the uplink signals, radio frequency signals received by each transmission/reception antenna 101 are amplified by each amplifying section 102. The transmission/reception sections 103 receive the uplink signals that are amplified by the amplifying sections 102, respectively. The transmission/reception sections 103 frequency-convert the received signals into baseband signals and the converted signals are then output to the baseband signal processing section 104.

The baseband signal processing section 104 performs FFT (Fast Fourier Transform) processing, IDFT (Inverse Discrete Fourier Transform) processing, error correction decoding, MAC retransmission control reception processing, and RLC layer and PDCP layer reception processing on user data included in the input uplink signals. The signals are then transferred to the higher station apparatus 30 via the transmission path interface 106. The call processing section 105 performs call processing such as setting up and releasing a communication channel, manages the state of the radio base station 10, and manages the radio resources.

The transmission path interface 106 performs transmission and reception of signals with the higher station apparatus 30 via a predetermined interface. Furthermore, the transmission path interface 106 can perform transmission and reception of signals (backhaul signaling) with another radio base station 10 via an inter-base-station interface (for example, optical fiber or X2 interface compliant with CPRI (Common Public Radio Interface)).

The transmission/reception section 103 transmits, to the user terminal 20, synchronization signals, reference signals, control signals, data signals and so on in a narrow band. In addition, the transmission/reception section 103 receives, from the user terminal 20, reference signals, control signals, data signals in the narrow band. Specifically, the transmission/reception section 103 transmits downlink control signal (DCI). Besides, the transmission/reception section 103 transmits PDSCH allocated to the user terminal 20 by DCI and receives PUSCH allocated to the user terminal by DCI.

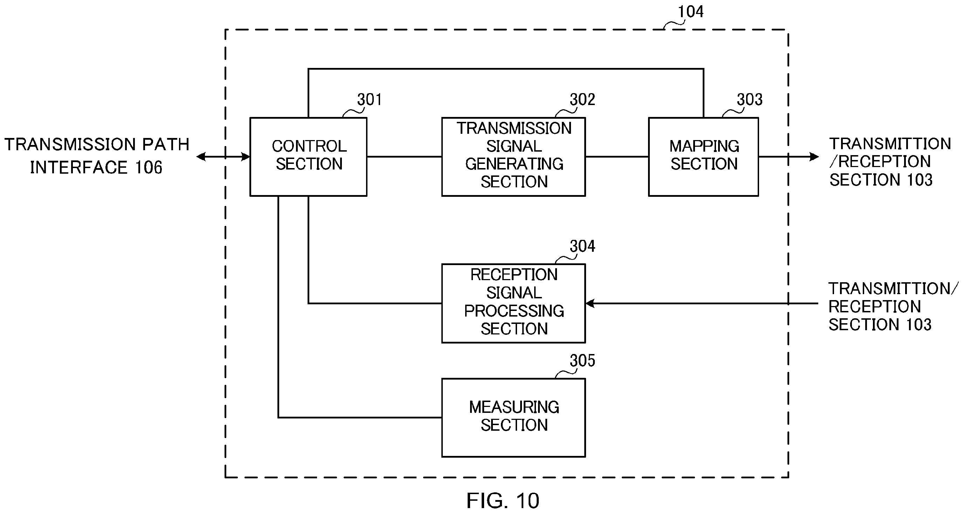

Fig. 10 is a diagram illustrating the functional configuration of the radio base station according to one embodiment. Note that although Fig. 10 mainly shows functional blocks of the features of the present embodiment, the radio base station 10 is also provided with other functional blocks that are necessary for carrying out radio communication. As illustrated in Fig. 10, the baseband signal processing section 104 includes a control section 301, a transmission signal generating section (generating section) 302, a mapping section 303, a reception signal processing section 304 and a measuring section 305.

The control section 301 controls the radio base station 10 as a whole. The control section 301 may be configured of a controller, a control circuit or a control device as explained based on the common knowledge in the technical field to which the present invention pertains.

The control section 301 controls, for example, generation of signals by the transmission signal generating section 302 and allocation of signals by the mapping section 303. In addition, the control section 301 controls the reception processing of signals by the reception signal processing section 304 and measurement of signals by the measuring section 305.

The control section 301 controls the system information, PDSCH, PUSCH resource allocation (scheduling). In addition, the control section 301 controls resource allocation of downlink reference signals such as synchronization signals (for example, PSS (Primary Synchronization Signal)/SSS (Secondary Synchronization Signal), NB-SS), CRS, CSI-RS, DM-RS and so on.

The control section 301 controls the transmission signal generating section 302 and the mapping section 303 to allocate various signals to a narrow band and transmit them to the user terminal 20. For example, the control section 301 controls to transmit downlink broadcast information (MIB, SIB (MTC-SIB)), PDCCH (M-PDCCH, NB-PDCCH, etc.) PDSCH in a narrow band. The narrow band (NB) is a band (for example, 180 kHz) narrower than the system band of the existing LTE system.

In addition, the control section may determine a resource to use for PUSCH reception (PUSCH resource) in smaller frequency units than PRB. Specifically, the control section 301 may determine a subcarrier for PUSCH reception based on at least one of resource information used for DCI transmission, identification information of the user terminal 20, and candidate subcarriers configured by higher layer signaling. For example, the control section 301 may determine a subcarrier for PUSCH reception as explained in the first to third embodiments.

In addition, the control section 301 may determine a resource to use for PDSCH transmission (PDSCH resource) in smaller frequency units than PRB (for example, in units of subcarrier). Specifically, the control section 301 may determine a subcarrier for PDSCH transmission based on at least one of resource information to use for DCI transmission, identification information of the user terminal 20, and candidate subcarriers configured by higher layer signaling. For example, the control section 301 may determine a subcarrier for PDSCH transmission as explained in the other embodiments.

Here, the resource information to use for DCI transmission may be at least one of, for example, CCE index, REG index, subframe number (subframe index), CCE or ECCE aggregation level, DCI repetition number, coverage level (repetition level), the number of subframes associated with DCI transmission (the number of subframes to which one DCI is mapped, the number of transmission subframes where search space is mapped, the number of NB-PDCCH subframes provided by DCI, etc.).

In addition, the control section 301 receives PUSCH in a determined PUSCH resource in cooperation with the transmission/reception section 103, the reception signal processing section 302 and the measuring section 305. Besides, the control section 301 transmits PDSCH in a determined PDSCH resource in cooperation with the transmission signal generating section 302, the mapping section 303 and the transmission/reception section 103.

The transmission signal generating section (generating section) 302 generates downlink signals (PDCCH, DSCH, downlink reference signals, and so on) based on an instruction from the control section 301, and outputs the generated signals to the mapping section 303. The transmission signal generating section may be configured of a signal generator, a signal generating circuit or a signal generating device as explained based on the common knowledge in the technical field to which the present invention pertains.

The transmission signal generating section 302 generates DCI (also called DL assignment, UL grant, etc.) to allocate PUSCH and/or PDSCH to the user terminal 20 based on an instruction from the control section 301. In addition, the PDSCH is subjected to coding processing, modulation processing in accordance with a coding rate and a modulation scheme determined based on channel state information (CSI) from each user terminal 20.

Based on an instruction from the control section 301, the mapping section 303 maps a DL signal generated in the transmission signal generating section 302 to a radio resource in a given narrow band (for example, maximum one resource block) and outputs the downlink signal to the transmitting/receiving section 103. The mapping section 303 may be configured of a mapper, a mapping circuit and a mapping device as explained based on common knowledge in the technical field to which the present invention pertains.

The reception signal processing section 304 performs receiving processing (e.g., demapping, demodulation, and decoding, etc.) on reception signals transmitted from the transmission/reception section 103. The reception signals used here are, for example, uplink signals (PUCCH, PUSCH, uplink reference signals, etc.) transmitted from the user terminal 20. The reception signal processing section 304 may be configured of a signal processor, a signal processing circuit, or a signal processing device as explained based on common knowledge in the technical field to which the present invention pertains.

The reception signal processing section 304 outputs information decoded in the decoding processing to the control section 301. The reception signal processing section 304 outputs reception signals and signals having been subjected to the reception processing to the measuring section 305.

The measuring section 305 performs measurement about received signals. The measuring section 305 may be configured of a measuring unit, a measuring circuit or a measuring device as explained based on common knowledge in the technical field to which the present invention pertains.

The measuring section 305 may perform measurements of signal reception power (for example, PSRP (Reference Signal Received Power)), reception quality (for example, RSRQ (Reference Signal Received Quality)), channel state and so on. The measurement result may be output to the control section 301.

<User Terminal>

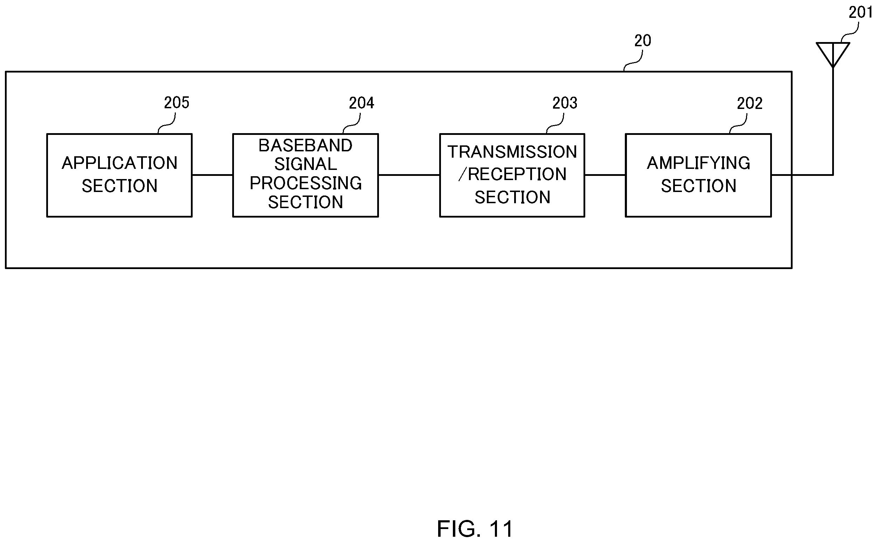

Fig. 11 is a diagram showing an overall structure of a user terminal according to an embodiment of the present invention. Note that detailed explanation is omitted here, but a normal LTE terminal may operate to behave as an NB-IoT terminal. The user terminal 20 is provided at least with a plurality of transmission/reception antennas 201, amplifying sections 202, transmission/reception sections 203, a baseband signal processing section 204 and an application section 205. Besides, the user terminal 20 may be provided with multiple sets of the transmission/reception antenna, an amplifying section and a transmission/reception section 203, etc.

Radio frequency signals that are received in the transmission/reception antennas 201 are respectively amplified in the amplifying sections 202. Each transmission/reception section 203 receives a downlink signal that has been amplified by an associated amplifying section 202.

The transmission/reception sections 203 perform frequency conversion on the reception signals and output the signals to the baseband signal processing section 204. Each transmission/reception 203 may be configured of a transmitter/receiver, a transmission/reception circuit or a transmission/reception device as explained based on the common knowledge in the technical field to which the present invention pertains. The transmission/reception section 203 may be an integral transmission/reception section or may be configured of a transmission section and a reception section.

The input baseband signal is subjected to an FFT process, error correction decoding, a retransmission control receiving process, etc., in the baseband signal processing section 204. The downlink user data is forwarded to the application section 205. The application section 205 performs processes related to higher layers above the physical layer and the MAC layer. Furthermore, out of the downlink data, broadcast information is also forwarded to the application section 205.

On the other hand, uplink user data is input to the baseband signal processing section 204 from the application section 205. In the baseband signal processing section 204, a retransmission control information (HARQ-ACK) transmission process, channel coding, precoding, a discrete fourier transform (DFT) process, an inverse fast fourier transform (IFFT) process, etc., are performed, and the result is forwarded to each transmission/reception section 203.

The baseband signal that is output from the baseband signal processing section 204 is converted into a radio frequency band in the transmission/reception 203. The radio frequency signal frequency-converted in the transmission/reception section 203 is amplified in the amplifying section 202 and then is transmitted from the transmission and reception antenna 201.

The transmission/reception section 203 receives synchronization signals, reference signals, control signals, data signals and so on in a narrow band from the radio base station 10. In addition, the transmission/reception section 203 transmits reference signals, control signals, data signals and so on in a narrow band to the radio base station 10. Specifically, the transmission/reception section 203 receives downlink control information (DCI). The transmission/reception section 203 receives PDSCH allocated to the user terminal by DCI and transmits PUSCH allocated to the user terminal by DCI.

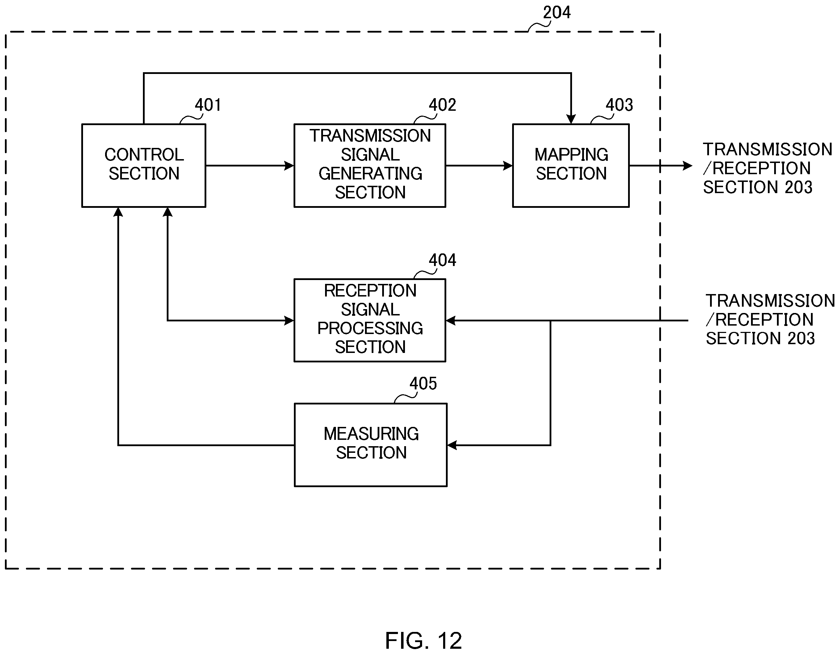

Fig. 12 is a diagram illustrating the functional configuration of the user terminal according to an embodiment of the present invention. Note that Fig. 12 mainly shows functional blocks of the features of the present embodiment, and the user terminal 20 is also provided with other functional blocks that are necessary for carrying out radio communication. As illustrated in Fig. 12, the baseband signal processing section 204 provided in the user terminal 20 includes a control section 401, a transmission signal generating section (generating section) 402, a mapping section 403, a reception signal processing section 404 and a measuring section 405.

The control section 401 controls the user terminal 20 as a whole. The control section 401 may be configured of a controller, a control circuit or a control device as explained based on common knowledge in the technical field to which the present invention pertains.

The control section 401 controls, for example, generation of signals by the transmission signal generating section 402 and signal mapping by the mapping section 403. In addition, the control section 401 controls signal reception processing by the reception signal processing section and measurement of signals by the measuring section 405.

The control section 401 obtains, from the reception signal processing section 404, downlink signals (PDCCH, PDSCH, downlink reference signals) transmitted from the radio base station 10. The control section 401 controls generation of uplink control information (UCI) such as retransmission control information (HARQ-ACK), channel state information (CSI) and uplink data based on the downlink signals.

In addition, the control section 401 may determine a resource to use for PUSCH transmission (PUSCH resource) in smaller frequency units than PRB (for example, subcarrier unit). Specifically, the control section 401 may determine a subcarrier for PUSCH transmission based on at least one of resource information to use for DCI reception, identification information of the user terminal 20 and candidate subcarriers configured by higher layer signaling. For example, the control section 401 may determine a subcarrier for PUSCH transmission as explained in the first to third embodiments. In addition, the control section 401 may determine a PRB for PUSCH transmission by higher layer signaling or/and based on DCI.

Further, the controls section 401 may determine a resource to use for PDSCH reception (PDSCH resource) in smaller frequency units than PRB (for example, subcarrier unit). Specifically, the control section 401 may determine a subcarrier for PDSCH reception based on at least one of resource information to use for DCI reception, identification information of the user terminal 20 and candidate subcarriers configured by higher layer signaling. For example, the control section 401 may determine a subcarrier for PDSCH reception as explained in the other embodiments. Or, the control section 401 may determine a PRB for PDSCH reception by higher layer signaling or/and based on DCI.

Here, the resource information to use for DCI reception may be at least one of, for example, CCE index, REG index, subframe number (subframe index), CCE or ECCE aggregation level, DCI repetition number, coverage level (repetition level), the number of subframes associated with DCI transmission (the number of subframes to which one DCI is mapped, the number of transmission subframes where search space is mapped, the number of NB-PDCCH subframes provided by DCI, etc.).

In addition, the control section transmit PUSCH in the above-mentioned PUSCH resource in cooperation with the transmission signal generating section 402, the mapping section 403 and the transmission/reception section 203. Further, the control section 401 receives PDSCH in the above-mentioned PDSCH resource in cooperation with the transmission/reception section 203, the reception signal processing section 404 and the measuring section 405.

The transmission signal generating section 402 generates uplink signals (PUCCH, PUSCH, uplink reference signals and so on) based on an instruction from the control section 401 and outputs the signals to the mapping section 403. The transmission signal generating section 402 may be configured of a signal generator, a signal generating circuit or a signal generating device as explained based on common knowledge in the technical field to which the present invention pertains.

For example, the transmission signal generating section 402 generates uplink control information (UCI) and/or uplink data based on an instruction from the control section 401. Besides, the transmission signal generating section 402 generates PUSCH carrying the UCI and/or uplink data based on an instruction from the control section 401. For example, when receiving DCI to allocate PUSCH to the user terminal 50, the transmission signal generating section 402 is instructed to generate PUSCH from the control section 401. Further, the transmission signal generating section 402 generates PUCCH carrying UCI based on an instruction from the control section 401.

The mapping section 403 maps the UL signal generated by the transmission signal generating section 402, based on an instruction from the control section 401, to a radio resource (for example, PUSCH resource or PUCCH resource) and outputs the generated signal to the transmission/reception section 203. The mapping section 403 may be configured of a mapper, a mapping circuit or a mapping device as explained based on the common knowledge in the technical field to which the present invention pertains.

The reception signal processing section 404 performs reception processing (e.g., demapping, demodulation, decoding, etc.) on a reception signal input from the transmission/reception section 203. Note that the reception signal is a downlink signal (a downlink control signal, a downlink data signal, a downlink reference signal, etc.) transmitted from the radio base station 10. The reception signal processing section 404 may be configured of a signal processor, a signal processing circuit or a signal processing device as explained based on the common knowledge in the technical field to which the present invention pertains.

The reception signal processing section 404 outputs information decoded by the reception processing to the control section 401. The reception signal processing section 404, for example, outputs broadcast information, system information, RRC signaling, DCI, etc. to the control section 401. In addition, the reception signal processing section 404 outputs a reception signal and a signal having been subjected to the reception processing, to the measuring section 405.

The measuring section 405 performs measurement about a received signal. The measuring section 405 may be configured of a measuring unit, a measuring circuit or a measuring device as explained based on common knowledge in the technical field to which the present invention pertains.

The measuring section 405 may, for example, measure reception power (for example, RSRP), reception quality (for example, RSRQ), a channel state of the received signal or the like. The measurement result may be output to the control section 401.

<Hardware Configuration>

Furthermore, the block diagrams used in the above description of the present embodiments indicate function-based blocks. These functional blocks (configured sections) are implemented via any combination of hardware and/or software. Furthermore, the implementation of each functional block is not limited to a particular means. In other words, each functional block may be implemented by a single device that is physically connected, or implemented by two or more separate devices connected by a fixed line or wirelessly connected.

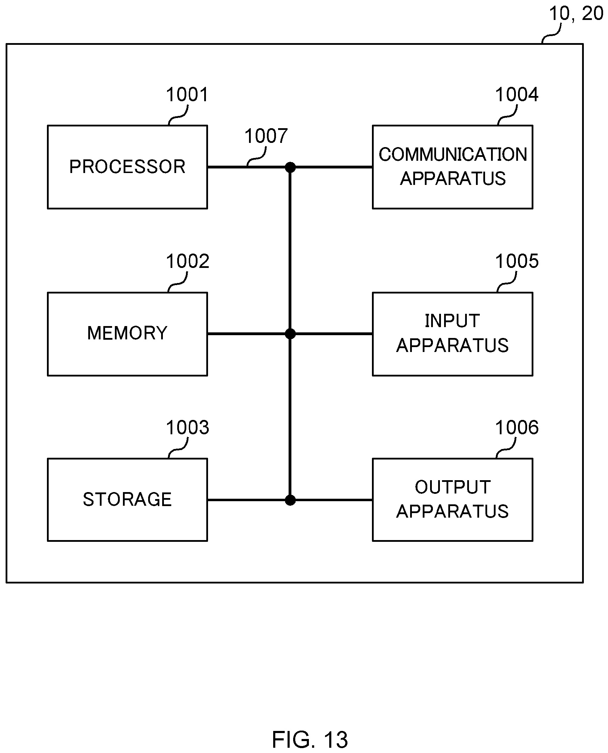

For example, the radio base station and the user terminal according to an embodiment of the present invention may function as a computer that performs processing of the radio communication method of the present invention. Fig. 13 is a diagram illustrating an example of the hardware configuration of the radio base station and the user terminal according to an embodiment of the present invention. The above-described radio base station 10 and user terminal 20 may be configured physically of a computer device including a processor 1001, a memory 1002, a storage 1003, a communication apparatus 1004, an input apparatus 1005, an output apparatus 1006, a bus 1007 and so on.

Note that in the following description, the term "apparatus" may be replaced with a circuit, a device, a unit or the like. The hardware configuration of the user terminal 20 and the radio base station 10 may be configured to include one or a plurality of apparatuses illustrated in the drawings or may be configured not including a part of the apparatuses.

Each function in the radio base station 10 and the user terminal 20 is realized by reading given software (program) to hardware of the processor 1001, the memory 1002 or the like, operating by the processor 1001, and controlling communication by the communication apparatus 1004 and data reading and/or writing in the memory 1002 and storage 1002.

For example, the processor 1001 controls the computer as a whole by operating an operating system. The processor 1001 may be configured of a central processing unit (CPU) including a register, an operating apparatus, a control apparatus, interface with a peripheral device and the like. For example, the above-mentioned baseband signal processing section 104 (204) and call processing section 105, etc. may be implemented by the processor 1001.

Further, the processor 1001 reads programs (program codes), software module and data from the storage 1003 and/or communication apparatus 1004 to the memory 1002 and uses this as a basis to execute various processing. The programs include programs to make the computer operate at least a part of the operations explained in the embodiments above. For example, the control section 401 of the user terminal 20 is stored in the memory 1002 and may be realized by a control program operating in the processor 1001 and other functional blocks may be also implemented in the same manner.

The memory 1002 is a computer readable recoding medium, and, for example, may be configured of at least one of ROM (Read Only Memory), EPROM (Erasable Programmable ROM), RAM (Random Access Memory) and so on. The memory 1002 may be called a resister, cache, main memory (main storage device) or the like. The memory 1002 may hold executable programs (program code), software module and so on to implement the radio communication method according to an embodiment of the present invention.

The storage 1003 is a computer readable storage medium and may be configured of at least one of an optical disk such as CD-ROM (Compact Disc ROM), hard disk drive, flexible disk, magnetic optical disk, flash memory and the like. The storage 1003 may be called auxiliary storage device.

The communication apparatus 1004 is hardware (transmission/reception device) for performing communication between computers via wire and/or wireless network and may be called network device, network controller, network card, communication module or the like. For example, the above-mentioned transmission/reception antennas 101(201), amplifying sections 102(202), transmission/reception sections 103(203), transmission path interface 106 and so on may be configured in the communication apparatus 1004.

The input apparatus 1005 is an input device receiving an input from the outside (for example, keyboard, mouse, etc.). The output device 1006 is an output device (for example, display, speaker, etc.) for executing output to the outside. The input apparatus 1005 and output apparatus 1006 may be configured integrally (for example, touch panel).

Further, various apparatuses including the processor 1001 and the memory 1002 are connected by a bus 1007 for information communication. The bus 1007 may be configured of a single bus or buses that are different between apparatuses.

In addition, the radio base station 10 and the user terminal 20 may be configured to include hardware such as a micro processor, a digital signal processor 'DSP), ASIC (Application Specific Integrated Circuit), PLD (Programmable Logic Device), and FPGA (Field Programmable Gate Array), or the hardware may be used to realize a part or all of the functional blocks. For example, the processor 1001 may be implemented by at least one of these hardware units.

Note that technical terms discussed in the present specification and/or technical terms necessary for understanding the present specification may be replaced with technical terms having the same or similar meaning. For example, channel and/or symbol may be signals (signaling). Furthermore, a signal may be a message. Furthermore, component carrier (CC) may be called a cell, frequency carrier or a carrier frequency, etc.

The radio frame may be configured of one or a plurality of time period (frames) in the time domain. The one or plural time periods (frames) each constitutes a radio frame and may be called a subframe. Further, the subframe may be configured of one or a plurality of slots in the time domain. Further, the slot may be configured of one or a plurality of symbols (OFDM symbols, SC-FDMA symbols, etc.) in the time domain.

The radio frame, subframe, slot and symbol each represent a time unit for signal transmission. The radio frame, subframe, slot and symbol may be called different names, respectively. For example, one subframe may be a transmission time interval (TTI), or continuous subframes may be called TTI, or one slot may be called TTI. That is, the subframe and TTI may be a subframe (1 ms) in the existing LTE, may be shorter than 1 ms (for example, 1-13 symbols) or may be longer than 1 ms.

Here, TTI denotes the minimum time unit for scheduling in radio communication. For example, the scheduling in the LTE system is such that a radio base station allocates to each user terminal radio resources (such as frequency bandwidth and transmission power available for each user terminal) on a TTI basis. The definition of TTI is not limited to this.

TTI having a time length of 1 ms may be called normal TTI (TTI in LTE Rel. 8-12), long TTI, normal subframe, lng subframe or the like. TTI that is shorter than the normal TTI may be called shortened TTI, short TTI, shorter TTI, shortened subframe, short subframe, shorter subframe or the like.

Resource block (RB) is a resource allocation unit in the time domain and frequency domain and may include one or a plurality of continuous subcarriers in the frequency domain. Besides, RB may include one or a plurality of symbols in the time domain and may be one slot, one subframe or one TTI length. One TTI and one subframe may be configured of one or a plurality of resource blocks. RB may be called physical resource block (PRB: Physical RB), PRB pair, RB pair or the like.

Further, resource block may be configured of one or a plurality of resource elements (REs). For example, one RE may be a radio resource area of one subcarrier and one symbol.

The above-described configuration of a radio frame, a subframe, a slot and a symbol is merely given by way of example. For example, the number of subframes included in a radio frame, the number of slots included in a subframe, the numbers of symbols and RBs included in a slot, the number of subcarriers included in an RB, the number of symbols in TTI, the symbol length, cyclic prefix (CP) length may be modified variously and appropriately.

## Claims

1. A user terminal comprising:

   a reception section that is configured to receive downlink control information;
   a transmission section that is configured to transmit an uplink shared channel based on the downlink control information; and
   a control section that is configured to determine one or more subcarriers to use for transmission of the uplink shared channel, based on an offset value associated with a given field value in the downlink control information.

2. The user terminal according to claim 1, wherein the control section is configured to determine a resource unit used for transmission of the uplink shared channel based on the downlink control information.

3. The user terminal according to claim 2, wherein the control section is configured to determine the one or more subcarriers used for transmission of the uplink shared channel in the resource unit based on the offset value.

4. The user terminal according to any one of claims 1 to 3, wherein the one or more subcarriers used for transmission of the uplink shared channel comprises three or six subcarriers.

5. The user terminal according to any one of claims 1 to 4, wherein a subcarrier spacing of the subcarrier is 15 kHz.

6. The user terminal according to any one of claims 1 to 5, wherein a usage band of the user terminal is limited to a narrower band than a minimum system band of Long Term Evolution (LTE).

7. The user terminal according to claim 3,
   wherein
   a time length of the resource unit is longer as a subcarrier spacing of the one or more subcarriers becomes narrower.

8. A radio base station comprising:

   a transmission section that is configured to transmit downlink control information; and
   a reception section that is configured to receive an uplink shared channel transmitted from a user terminal based on the downlink control information,
   wherein the uplink shared channel is transmitted using one or more subcarriers that are determined based on an offset value associated with a given field value in the downlink control information in the user terminal.

9. A radio communication method between a user terminal and a radio base station, comprising:

   in a user terminal,
   receiving downlink control information;
   transmitting an uplink shared channel based on the downlink control information; and
   determining one or more subcarriers used for transmission of the uplink shared channel, based on an offset value associated with a given field value in the downlink control information.

## Patentansprüche

1. Benutzerendgerät, umfassend:

   einen Empfangsabschnitt, der so ausgelegt ist, dass er Downlink-Steuerinformationen empfängt;

einen Übertragungsabschnitt, der so ausgelegt ist, dass er auf Basis der Downlink-Steuerinformationen einen gemeinsamen Uplink-Kanal überträgt; und
einen Steuerabschnitt, der so ausgelegt ist, dass er auf Basis eines Versatzwertes, der mit einem gegebenen Feldwert in den Downlink-Steuerinformationen verknüpft ist, einen oder mehrere Unterträger bestimmt, die für Übertragung des gemeinsamen Uplink-Kanals verwendet werden sollen.

2. Benutzerendgerät nach Anspruch 1, wobei der Steuerabschnitt so ausgelegt ist, dass er auf Basis der Downlink-Steuerinformationen eine Ressourceneinheit bestimmt, die für Übertragung des gemeinsamen Uplink-Kanals verwendet wird.

3. Benutzerendgerät nach Anspruch 2, wobei der Steuerabschnitt so ausgelegt ist, dass er den einen oder die mehreren Unterträger, die für Übertragung des gemeinsamen Uplink-Kanals in der Ressourceneinheit verwendet werden, auf Basis des Versatzwertes bestimmt.

4. Benutzerendgerät nach einem der Ansprüche 1 bis 3, wobei der eine oder die mehreren Unterträger, die für Übertragung des gemeinsamen Uplink-Kanals verwendet werden, drei oder sechs Unterträger umfassen.

5. Benutzerendgerät nach einem der Ansprüche 1 bis 4, wobei ein Unterträgerabstand des Unterträgers 15 kHz beträgt.

6. Benutzerendgerät nach einem der Ansprüche 1 bis 5, wobei ein Nutzband des Benutzerendgeräts auf ein Band begrenzt ist, das schmaler ist als ein minimales Systemband von Long Term Evolution (LTE).

7. Benutzerendgerät nach Anspruch 3, wobei eine Zeitlänge der Ressourceneinheit mit schmäler werdendem Unterträgerabstand des einen oder der mehreren Unterträger länger wird.

8. Funkbasisstation, umfassend:

einen Übertragungsabschnitt, der so ausgelegt ist, dass er Downlink-Steuerinformationen überträgt; und
einen Empfangsabschnitt, der so ausgelegt ist, dass er einen gemeinsamen Uplink-Kanal empfängt, der auf Basis der Downlink-Steuerinformationen von einem Benutzerendgerät übertragen wird,
wobei der gemeinsame Uplink-Kanal unter Verwendung eines oder mehrerer Unterträger übertragen wird, die im Benutzerendgerät auf Basis eines Versatzwertes bestimmt werden, der mit einem gegebenen Feldwert in den Downlink-Steuerinformationen verknüpft ist.

9. Verfahren zur Funkkommunikation zwischen einem Benutzerendgerät und einer Funkbasisstation, umfassend:

in einem Benutzerendgerät,
Empfangen von Downlink-Steuerinformationen;
Übertragen eines gemeinsamen Uplink-Kanals auf Basis der Downlink-Steuerinformationen; und
Bestimmen eines oder mehrerer Unterträger, die für Übertragung des gemeinsamen Uplink-Kanals verwendet werden, auf Basis eines Versatzwertes, der mit einem gegebenen Feldwert in den Downlink-Steuerinformationen verknüpft ist.

**Revendications**

1. Terminal utilisateur comprenant :

une section de réception qui est conçue pour recevoir des informations de commande de liaison descendante ;
une section de transmission qui est conçue pour transmettre un canal partagé de liaison montante sur la base des informations de commande de liaison descendante ; et
une section de commande qui est conçue pour déterminer une ou plusieurs sous-porteuses à utiliser pour une transmission du canal partagé de liaison montante, sur la base d'une valeur de décalage associée à une valeur de champ donnée dans les informations de commande de liaison descendante.

2. Terminal utilisateur selon la revendication 1, dans lequel la section de commande est conçue pour déterminer une unité de ressource utilisée pour une transmission du canal partagé de liaison montante sur la base des informations de commande de liaison descendante.

**3.** Terminal utilisateur selon la revendication 2, dans lequel la section de commande est conçue pour déterminer les une ou plusieurs sous-porteuses utilisées pour une transmission du canal partagé de liaison montante dans l'unité de ressource sur la base de la valeur de décalage.

**4.** Terminal utilisateur selon l'une quelconque des revendications 1 à 3, dans lequel les une ou plusieurs sous-porteuses utilisées pour une transmission du canal partagé de liaison montante comprennent trois ou six sous-porteuses.

**5.** Terminal utilisateur selon l'une quelconque des revendications 1 à 4, dans lequel un espacement de sous-porteuse de la sous-porteuse est de 15 kHz.

**6.** Terminal utilisateur selon l'une quelconque des revendications 1 à 5, dans lequel une bande d'usage du terminal utilisateur est limitée à une bande plus étroite qu'une bande système minimum d'évolution à long terme (LTE).

**7.** Terminal utilisateur selon la revendication 3, dans lequel
une longueur de temps de l'unité de ressource est plus longue au fur et à mesure qu'un espacement de sous-porteuse des une ou plusieurs sous-porteuses devient plus étroit.

**8.** Station de base radio, comprenant :

une section de transmission qui est conçue pour transmettre des informations de commande de liaison descendante ; et
une section de réception qui est conçue pour recevoir un canal partagé de liaison montante transmis à partir d'un terminal utilisateur sur la base des informations de commande de liaison descendante,
dans lequel le canal partagé de liaison montante est transmis au moyen d'une ou de plusieurs sous-porteuses qui sont déterminées sur la base d'une valeur de décalage associée à une valeur de champ donnée dans les informations de commande de liaison descendante dans le terminal utilisateur.

**9.** Procédé de radiocommunication entre un terminal utilisateur et une station de base radio, comprenant :

dans un terminal utilisateur,
une réception d'informations de commande de liaison descendante ;
une transmission d'un canal partagé de liaison montante sur la base des informations de commande de liaison descendante ; et
une détermination d'une ou plusieurs sous-porteuses utilisée(s) pour une transmission du canal partagé de liaison montante, sur la base d'une valeur de décalage associée à une valeur de champ donnée dans les informations de commande de liaison descendante.

FIG. 1

12 subcarriers (1 ms)   4 subcarriers (3 ms)   2 subcarriers (6 ms)

12 subcarriers

1ms

1 subcarrier (12 ms)

FIG. 2

EP 3 383 112 B1

Subcarrier Spacing 15kHz

Subcarrier Spacing 3.75kHz

12 subcarriers

48 subcarriers

1 ms

4 ms

FIG. 3

EP 3 383 112 B1

Subcarrier Spacing  15kHz

CCE index #11
CCE index #10
CCE index #9
CCE index #8
CCE index #7
CCE index #6
CCE index #5
CCE index #4
CCE index #3
CCE index #2
**CCE index #1**
CCE index #0

Subcarrier #11
Subcarrier #10
Subcarrier #9
Subcarrier #8
Subcarrier #7
Subcarrier #6
Subcarrier #5
Subcarrier #4
Subcarrier #3
Subcarrier #2
Subcarrier #1
Subcarrier #0

12 subcarriers

1 ms

FIG. 4

Subcarrier Spacing 15kHz

Subcarrier #11 ← SF#3 & CCE index #2

Subcarrier #10 ← SF#2 & CCE index #2

Subcarrier #9 ← SF#1 & CCE index #2

Subcarrier #8 ← SF#0 & CCE index #2

Subcarrier #7 ← SF#3 & CCE index #1

Subcarrier #6 ← SF#2 & CCE index #1

Subcarrier #5 ← SF#1 & CCE index #1

Subcarrier #4 ← SF#0 & CCE index #1

Subcarrier #3 ← SF#3 & CCE index #0, SF#3 & CCE index #3

Subcarrier #2 ← SF#2 & CCE index #0, SF#2 & CCE index #3

Subcarrier #1 ← **SF#1 & CCE index #0**, SF#1 & CCE index #3

Subcarrier #0 ← SF#0 & CCE index #0, SF#0 & CCE index #3

12 subcarriers

1 ms

FIG. 5

EP 3 383 112 B1

Subcarrier Spacing 15kHz

| | |
|---|---|
| Subcarrier #11 | ← CCE index #11 |
| Subcarrier #10 | ← CCE index #10 |
| Subcarrier #9 | ← CCE index #9 |
| Subcarrier #8 | ← CCE index #8 |
| Subcarrier #7 | ← CCE index #7 |
| Subcarrier #6 | ← CCE index #6 |
| Subcarrier #5 | ← CCE index #5 |
| Subcarrier #4 | ← CCE index #4 |
| Subcarrier #3 | ← CCE index #3, #15 |
| Subcarrier #2 | ← CCE index #2, #14 |
| Subcarrier #1 | ← **CCE index #1**, #13 |
| Subcarrier #0 | ← CCE index #0, #12 |

12 subcarriers

Offset N

1 ms

| Filed Value in DCI | Offset value N |
|---|---|
| 00 | 0 |
| 01 | 1 |
| 10 | 2 |
| 11 | 3 |

FIG. 6

EP 3 383 112 B1

| Value in DCI | Subcarrier location configured by higher layer signalling |
|:---:|:---:|
| 00 | Subcarrier #1 |
| 01 | Subcarrier #2 |
| 10 | Subcarrier #3 |
| 11 | Subcarrier #4 |

FIG. 7

40

CORE NETWORK

1

30

HIGHER
STATION
APPARATUS

50

NB-IoT UE

20C

10

LTE UE

20A

20B  NB-IoT UE

FIG. 8

TO HIGHER STATION
APPARATUS 30 OR
ANOTHER RADIO
BASE STATION 10

TRANSMISSION
PATH
INTERFACE
106

BASEBAND
SIGNAL
PROCESSING
SECTION
104

TRANSMISSION/
RECEPTION
SECTION
103

AMPLIFYING
SECTION
102

CALL
PROCESSING
SECTION
105

TRANSMISSION/
RECEPTION
SECTION
103

AMPLIFYING
SECTION
102

10

101

101

EP 3 383 112 B1

FIG. 9

FIG. 10

EP 3 383 112 B1

FIG. 11

EP 3 383 112 B1

FIG. 12

10, 20

```
            1001                              1004
        ┌───────────────┐  1007          ┌───────────────┐
        │               │                │ COMMUNICATION │
        │   PROCESSOR   │────────●───────│  APPARATUS    │
        │               │                │               │
        └───────────────┘                └───────────────┘

            1002                              1005
        ┌───────────────┐                ┌───────────────┐
        │               │                │     INPUT     │
        │    MEMORY     │────────●───────│  APPARATUS    │
        │               │                │               │
        └───────────────┘                └───────────────┘

            1003                              1006
        ┌───────────────┐                ┌───────────────┐
        │               │                │    OUTPUT     │
        │   STORAGE     │────────●───────│  APPARATUS    │
        │               │                │               │
        └───────────────┘                └───────────────┘
```

FIG. 13

REFERENCES CITED IN THE DESCRIPTION

**Patent documents cited in the description**

- EP 3101982 A2

**Non-patent literature cited in the description**

- Study on provision of low-cost Machine-Type Communications (MTC) User Equipments (UEs) based on LTE (Release 12). *3GPP TR 36.888*